Europäisches Patentamt

European Patent Office

Office européen des brevets

(11) Veröffentlichungsnummer: **0 387 370**
**A1**

## (12) EUROPÄISCHE PATENTANMELDUNG

(21) Anmeldenummer: 89104489.3

(22) Anmeldetag: **14.03.89**

(51) Int. Cl.5: **A63B 39/06, B29D 22/00**

(43) Veröffentlichungstag der Anmeldung:
**19.09.90 Patentblatt 90/38**

(84) Benannte Vertragsstaaten:
**DE GB IT SE**

(71) Anmelder: **VYZKUMNY USTAV GUMARENSKE TECHNOLOGIE**

**Gottwaldova(CS)**

(72) Erfinder: **Badura, Rudolf, Dipl.-Ing.**
**Gottwaldov**
**Jaroslavice 129(CS)**
Erfinder: **Meduna, Jaroslav, Dipl.-Ing.**
**Odry**
**Smetanova 3(CS)**

(74) Vertreter: **Patentanwälte Beetz sen. - Beetz jun. Timpe - Siegfried - Schmitt-Fumian**
**Steinsdorfstrasse 10**
**D-8000 München 22(DE)**

(54) **Verfahren und Einrichtung zum mechanisierten Aufkleben von Flächenverkleidungswerkstoffen auf kugelförmige Körper.**

(57) Bei diesem Verfahren wird zuerst aus dem zugehörigen Verkleidungswerkstoff das Verkleidungshalbprodukt (5) hergestellt, welches die Form eines Flächengebildes aufweist, das aus zwei Teilflächen in der Gestalt von zwei Achten 1, 2) mit gegeneinander senkrecht orientierten Symmetrielängsachsen besteht Nach der Beschichtung des Verkleidungshalbproduktes (5) und/oder des kugelförmigen Körpers 6) mit einem Haftwerkstoff wird der Körper (6) in den Mittelteil des Verkleidungshalbproduktes (5) eingelegt, und durch die Umklappung aller vier Teile des Verkleidungshalbproduktes (5) über den Körper (6) wird dieser Körper (6) völlig in der Verkleidung eingeschlossen. Die erfindungsgemäße Einrichtung ist so ausgebildet, daß sie Segmentformen aufweist, von denen jede durch einen festen Teil (7) gebildet ist, auf welchem zwei Segmentpaare (8, 8, 9, 9) drehbar gelagert sind, welche gemeinsam mit dem Hohlraum des festen Teiles (7) die zu verkleidende Kugelfläche einschließen. Die Kippbewegung der Segmente (8, 8, 9, 9) ist auf einer Viertelkreisbogenbahn in Richtung des Pfeils (11) über Zugstangen (10) von geradlinigen Motoren vorgesehen.

FIG.2

FIG. 3

## Verfahren und Einrichtung zum mechanisierten Aufkleben von Flächenverkleidungswerkstoffen auf kugelförmige Körper

Die Erfindung betrifft ein Verfahren zum mechanisierten Aufkleben von Flächenverkleidungswerkstoffen auf kugelförmige Körper, besonders zum Aufkleben der Verkleidungen auf die Seelen von Tennisbällen. Weiter betrifft die Erfindung eine Einrichtung zur Durchführung dieses Verfahrens

Das Aufkleben von flachen Verkleidungswerkstoffen auf kugelförmige Körper, wobei es in der Praxis vor allem um das Aufkleben von Meltonverkleidungen auf die Seelen von Tennisbällen geht, ist allgemein ein ziemlich kompliziertes Problem. Die Verwickelung resultiert schon aus dem Grundprinzip, welches darin liegt, daß eine nicht abwickelbare Kugelfläche durch mehrere abwickelbare Teilflächen approximiert werden muß. In der Praxis werden bei den Tennisbällen schon traditionell zwei ineinander eingreifende Flächengebilde in der Gestalt von Achtteilflächen angewendet. Damit diese Gebilde die Kugelfläche der Seele des Tennisballs genau bedecken, müssen sie verhältnismäßig genau hergestellt (mit Rücksicht auf die Maßtoleranzen) und auch sehr präzise positioniert und fixiert werden. Weil die genaue Bedeckung der Seele des Tennisballs durch die Verkleidung für die resultierende Ballqualität entscheidend ist, muß man der Genauigkeit der Positionierungs- und Aufklebeoperation der Verkleidung eine beträchtliche Aufmerksamkeit zuwenden. Das ist wohl auch der Hauptgrund der Tatsache, daß die Mechanisierung und die Automatisation dieser Operation sich nur sehr schwierig durchsetzen. Auch gegenwärtig wird nämlich bei den meisten Herstellern das Aufkleben der Verkleidungen auf die Seelen von Tennisbällen von Hand durchgeführt, und die Automatisierungsversuche bleiben eher auf den theoretischen Bereich beschränkt.

Es ist z. B ein Verfahren zum mechanischen Aufkleben von Deckenteilen in der Form von Achten auf die kugelförmigen Gegenstände bekannt, dessen Wesen darin liegt, daß die einzelnen zusammenzuklebenden Teile, d. h. die Gummiseele und die Meltonachten, welche auf den zusammenzuklebenden Flächen mit dem Klebeauftrag versehen sind, in der Anfangsphase in einer Lage ausgerichtet werden, in welcher die Seele durch die Mitten der Achten eingeschlossen ist, welche längs deren Längsachsen gemäß der Seelenabrundung kehlenförmig durchgebogen sind. Die Achten sind dabei so orientiert, daß ihre windschiefen Achsen einen rechten Winkel bilden. In dieser Stellung folgt dann das mechanische Kippen der beiden Hälften von beiden Achten um die Kugeloberfläche der Seele beim gleichzeitigen Aufkleben. Hinsichtlich der Einrichtungskonstruktion wird dieses Kippen durch ein Paar von kehlenförmig durchgebogenen elastischen Haltern bewirkt

Ein anderes bekanntes Verfahren sieht ein fortschreitendes Abrollen der Seelen auf der Oberfläche von zwei kehlenförmig profilierten Gleitplatten vor, wobei auf jeder von ihnen eine der Verkleidungsachten gelagert ist. Die Bahnen dieser beiden Platten sind lotrecht zueinander Die Konstruktion der Einrichtung ermöglicht auch die gleichzeitige Verkleidung mehrerer Tennisbälle

Ein gemeinsamer Nachteil dieser beiden Verfahren liegt in der Tatsache, daß sie nicht ganz zuverlässig geeignet sind, die präzise Bedeckung der Kugelfläche der Gummiseele durch die Meltonverkleidung zu gewährleisten. Durch den Einfluß der Herstellungstoleranzen der Achten beim Ausstanzen bzw. auch durch den Einfluß der Toleranzen der Gummiseelen kann es nämlich leicht zu Ungenauigkeiten in der Verkleidungsposition kommen (Unterziehung oder umgekehrt Überdeckung von Meltonrändern) Zu diesem Nachteil kann es außerdem auch bei den genau ausgestanzten Achten kommen, und zwar durch den Einfluß ihrer Dehnung beim mechanischen Aufkleben. Diese Nachteile begrenzen in einem beträchtlichen Maß die Möglichkeiten der praktischen Anwendung der beiden oben angeführten Verfahren. Gemäß manchen Herstellern sind diese Begrenzungen so schwerwiegend, daß die praktische Anwendung dieser beiden Verfahren nicht als verwirklichbar angesehen werden kann.

Der Erfindung liegt die Aufgabe zugrunde, ein Verfahren und eine Einrichtung zum mechanisierten Aufkleben von Flächenverkleidungswerkstoffen auf kugelförmige Körper zu entwickeln, womit die Arbeitsproduktivität und die Ver kleidungspositionsgenauigkeit gegenüber den bekannten Verfahren und Einrichtungen beträchtlich gesteigert werden

Gegenstand der Erfindung, womit diese Aufgabe gelöst wird, ist zunächst ein Verfahren zum mechanisierten Aufkleben von Flächenverkleidungswerkstoffen auf kugelförmige Körper, besonders zum Aufkleben der Verkleidungen auf die Seelen von Tennisbällen, das dadurch gekennzeichnet ist, daß aus dem zugehörigen Verkleidungswerkstoff zuerst ein Verkleidungshalbprodukt hergestellt wird, welches die Form eines Flächengebildes aufweist, das aus zwei Teilflächen in der Gestalt von zwei Achten mit gegeneinander senkrecht orientierten Symmetrielängsachsen besteht, wobei die horizontal orientierte Achtteilfläche an der engsten Stelle in zwei Hälften quer aufgetrennt ist und jede dieser Hälften dann im Scheitelbereich ihres abgerundeten Teiles an eine Seite der vertikal orientierten Achtteilfläche in dem Bereich ihrer engsten Stelle angeschlossen ist, daß nach der Beschichtung des Verkleidungshalbproduktes und/oder des kugelförmigen zu verkleidenden Körpers mit einem Haftwerstoff der Körper in den Mittelteil des Verkleidungshalbproduktes eingelegt und zu dessen Symmetrielängsachsen zentriert wird und daß durch die Umklappung aller vier vom Mittelteil nach außen erstreckten Teile des Verkleidungshalbproduktes über den Körper dieser Körper völlig in der Verkleidung eingeschlossen wird.

Gegenstand der Erfindung ist außerdem eine Einrichtung zur Durchführung des erfindungsgemäßen Verfahrens, dadurch gekennzeichnet, daß sie eine Segmentform oder mehrere Segmentformen aufweist, die bzw. deren jede durch einen festen Teil gebildet ist, auf welchem zwei Segmentpaare drehbar gelagert sind, welche gemeinsam mit dem Hohlraum des festen Teiles die zu verkleidende Kugelfläche einschließen, wobei jedes Segment die Gestalt einer Hälfte einer räumlichen Achtteilfläche aufweist, die bei dem Paar der kürzeren Segmente mit dem verengten Teil einwärts, d. h. in Richtung zu dem Hohlraum des festen Teils, und bei dem Paar der längeren Segmente mit dem verengten Teil auswärts gerichtet ist, daß die Segmente zum Einschließen der Kugelfläche auf je einer Viertelkreisbogenbahn (in Richtung des Pfeils) über Zugstangen von geradlinigen Motoren kippbar sind und daß die bzw. von denen jede Segmentform mit einem Druckfinger mit einer Teilkugel-Endfläche versehen ist, der in der vertikalen Achse der Segmentform angeordnet und vertikal (in Richtung des Pfeils) verschiebbar ist.

Der Hauptvorteil der Erfindung liegt in der wesentlichen -bis mehrfachen - Erhöhung der Arbeitsproduktivität (besonders im Vergleich mit dem Handaufkleben der Verkleidungen). Im Vergleich mit den bisherigen Verfahren des mechanisierten Aufklebens von Verkleidungen wird vor allem die Beseitigung des Hauptnachteiles, d. h. der Ungenauigkeit in der Positionierung der Verkleidung, erreicht. Dadurch ergibt sich eine sehr vorteilhafte Anwendung des erfindungsgemäßen Verfahrens und der Einrichtung beim automatisierten Betrieb der Tennisballherstellung ohne Auftreten der bisherigen Qualitätsmängel.

Zur näheren Erläuterung der Erfindung dient das folgende praktische Beispiel des Verfahrens zum mechanisierten Aufkleben von Flächenverkleidungswerkstoffen auf kugelförmige Körper und der Konstruktionslösung der Einrichtung zu des sen Durchführung anhand der Zeichnung; darin zeigen:

Fig. 1 ein Verkleidungshalbprodukt, das als Fläche abgewickelt ist;

Fig 2 eine schematische Darstellung der Lage des Kugelkörpers auf dem Verkleidungshalbprodukt;

Fig. 3 ein Schema der geschlossenen Segmentform;

Fig 4 ein Schema der geöffneten Segmentform mit dem eingezeichneten Umriß des Verkleidungshalbproduktes; und

Fig. 5 einen schematischen Schnitt durch die geöffnete Segmentform mit dem eingezeichneten Umriß des Verkleidungshalbproduktes und der Lage des Kugelkörpers.

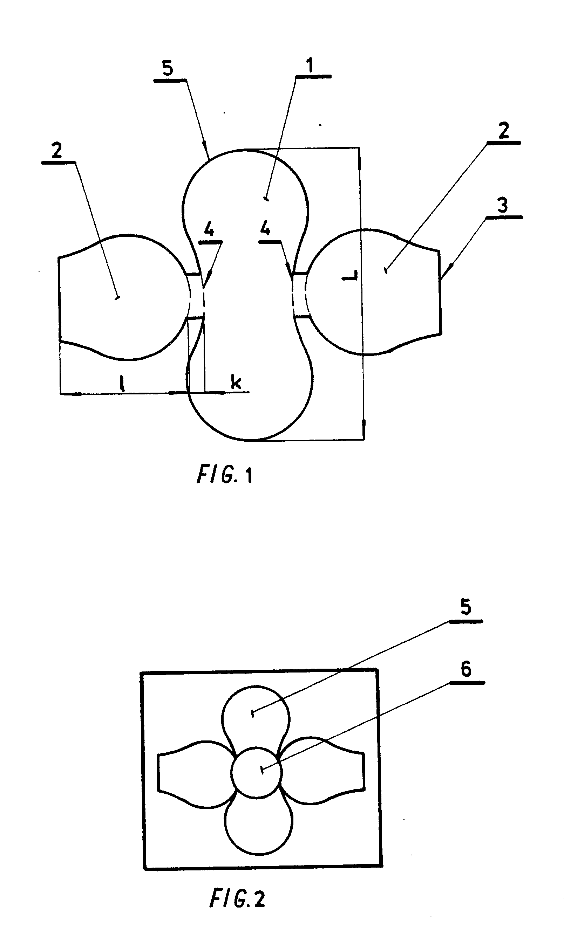

Als ein konkretes Beispiel des erfindungsgemäßen Verfahrens wird im weiteren das Verfahren des Aufklebens von Meltonverkleidungen auf die Seelen der Tennisbälle beschrieben. Bei dieser Variante wird zuerst, im Einklang mit dem verallgemeinerten Verfahren, aus dem Melton das Verkleidungshalbprodukt ausgestanzt. Dieses Verkleidungshalbprodukt 5 (siehe Fig. 1) weist eine Form des Flächengebildes auf, das aus zwei Teilflächen in der Gestalt von zwei Achten mit gegeneinander senkrecht orientierten Symmetrielängsachsen besteht Dabei ist allerdings die horizontal orientierte Acht 2 an der engsten Stelle 3 in zwei Hälften quer aufgetrennt, und jede dieser Hälften ist dann im Scheitelbereich ihres abgerundeten Teiles an eine Seite der vertikal orientierten Acht 1 in dem Bereich ihrer engsten Stelle angeschlossen. Im Hinblick darauf, daß diese Verbindung durch die Hälse 4 mit der Breite k erfolgt, welche der Breite der Verbindungen an den Rändern der Meltonverkleidung der klassisch hergestellten Tennisbälle entspricht, muß für die Länge 1 jeder der beiden Hälften der horizontal orientierten Acht 2 die Beziehung gelten:

$$l = \tfrac{1}{2} L - \tfrac{1}{2} k,$$

wo L die Länge der vertikal orientierten Acht 1 ist

Das erzeugte flächige Halbprodukt 5 zur Verkleidung des Tennisballs und/oder die Seele des Tennisballs, die in diesem Fall den zu verkleidenden Körper 6 darstellt, werden mit einer Schicht des Haftwerkstoffes versehen, und dann folgt die Positionierung der Seele 6 auf dem Mittelteil des Verkleidungshalbproduktes 5, wie schematisch in Fig. 2 dargestellt ist. Nach der Zentrierung des zu verkleidenden Körpers 6 (der Seele) hinsichtlich der Achsen des Verkleidungshalbproduktes 5 schließt man durch die Umklappung aller vier Teile des Verkleidungshalbproduktes 5 über den Körper 6 diesen Körper (die Seele) in die Verkleidung ein.

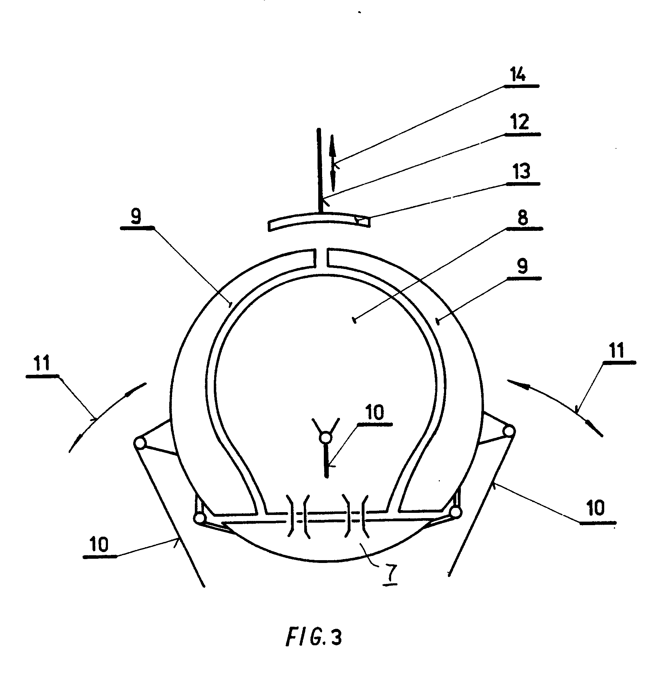

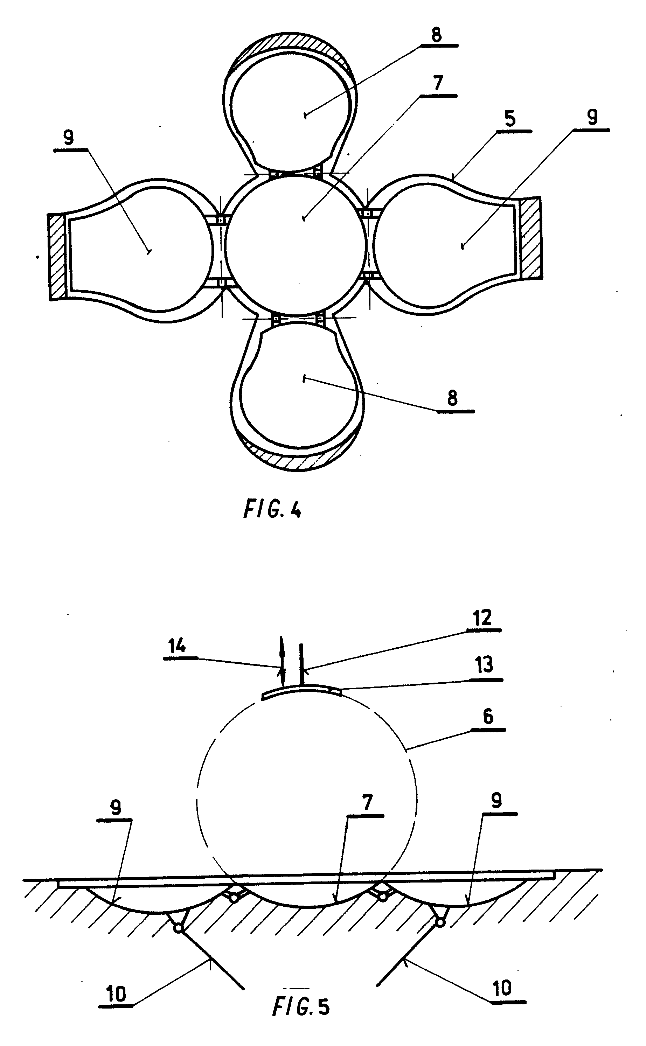

Die Einrichtung zum mechanisierten Aufkleben von Meltonverkleidungen auf die Seelen der Tennisbälle weist eine oder mehrere Segmentformen auf. Jede dieser Formen (siehe Fig. 3) ist durch einen festen Teil 7 gebildet, auf welchem zwei Paare von Segmenten gelagert sind, die zusammen mit dem Hohlraum des festen Teils 7 bemessen sind, die Oberfläche des kugelförmigen Körpers 6 einzuschließen. Jedes der Segmente weist eine Form der Hälfte einer räumlichen Acht auf, welche bei dem Paar der kürzeren Segmente 8 mit dem verengten Teil einwärts, d. h. in Richtung zu dem Hohlraum des festen Teils 7, und bei dem Paar der längeren Segmente 9 mit dem verengten Teil auswärts gerichtet ist (am besten aus Fig. 4 ersichtlich). Die Segmente sind längs der angedeuteten Viertelkreisbogenbahn (in Richtung der Pfeile 11) klapp- oder kippbar, wobei ihre Kippbewegung über die Zugstangen 10 von nicht dargestellten geradlinigen Motoren (z. B. hydraulischen oder pneumatischen Zylindern) erfolgt. Jede Segmentform ist weiter mit einem Druckfinger 12 versehen, der eine Teilkugelendfläche 13 mit einem Halbmesser aufweist, der dem Halbmesser des zu verkleidenden Körpers 6 entspricht. Der Druckfinger 12 ist in der vertikalen Achse der Kugelsegmentform untergebracht und in Richtung des Pfeils 14 vertikal verschiebbar.

Die Folge der Arbeitsoperationen auf der oben beschriebenen Einrichtung sieht vor:

- die Bedienung legt in die angefräste Gestalt auf dem Arbeitstisch das ausgestanzte Verkleidungshalbprodukt 5 ein, legt annähernd in seine Mitte die Seele 6 auf und schaltet den Selbstgang der Einrichtung ein. (Bemerkung: die angefräste Gestalt auf dem Arbeitstisch und die Stellung der einzelnen Segmente der geöffneten Form sind am besten in Fig. 4 und 5 sichtbar. Die erwähnte angefräste Gestalt ist in Fig 4 schraffiert dargestellt);

- nach der Einschaltung des Selbstganges der Einrichtung kommt es zuerst zu dem Ausschieben des Druckfingers 12 in Richtung der Seele 6. Durch die Anlage der Teilkugelendfläche 13 des Druckfingers 12 auf dem Körper 6 (der Seele) zentriert sich dieser Körper 6 gegenüber den Achsen des Verkleidungshalbproduktes 5; und

- mit einer geringfügigen Zeitverschiebung gegenüber der vorhergehenden Operation beginnen sich das Paar der kürzeren Segmente 8 und synchronisiert mit dem Wegschieben des Druckfingers 12 dann folgend auch das Paar der längeren Segmente 9 um den Körper 6 herum zu schließen;

- die Operation der Formöffnung und -schließung kann sich auch einmal oder mehrmals wiederholen (natürlich dann ohne Beteiligung des Druckfingers). Dadurch wird eine bessere Verbindung der Verkleidung 5 mit der Gummiseele 6 gewährleistet.

Die Art der einzelnen Operationen bietet eine sehr gute Möglichkeit der Gesamtautomatisation der Aufklebung von Verkleidungen auf die Seelen der Tennisbälle, z. B. auf einer karussellförmigen Einrichtung. Sie bietet ebenfalls eine gute Möglichkeit, die Operation des Aufklebens in die gesamte mechanisierte Herstellung von Tennisbällen (mit der geraden Einbindung des automatisierten Aufklebezyklus in die vorhergehenden und nachfolgenden Operationen) einzugliedern.

## Ansprüche

1. Verfahren zum mechanisierten Aufkleben von Flächenverkleidungswerkstoffen auf kugelförmige Körper, besonders zum Aufkleben der Verkleidungen auf die Seelen von Tennisbällen, **dadurch gekennzeichnet,** daß aus dem zugehörigen Verkleidungswerkstoff zuerst ein Verkleidungshalbprodukt (5) hergestellt wird, welches die Form eines Flächengebildes aufweist, das aus zwei Teilflächen in der Gestalt von zwei Achten mit gegeneinander senkrecht orientierten Symmetrielängsachsen besteht, wobei die horizontal orientierte Achtteilfläche (2) an der engsten Stelle (3) in zwei Hälften quer aufgetrennt ist und jede dieser Hälften dann im Scheitelbereich ihres abgerundeten Teiles an eine Seite der vertikal orientierten Achtteilfläche (1) in dem Bereich ihrer engsten Stelle angeschlossen ist, daß nach der Beschichtung des Verkleidungshalbproduktes (5) und/oder des kugelförmigen zu verkleidenden Körpers (6) mit einem Haftwerkstoff der Körper (6) in den Mittelteil des Verkleidungshalbproduktes (5) eingelegt und zu dessen Symmetrielängsachsen zentriert wird und daß durch die Umklappung aller vier vom Mittelteil nach außen erstreckten Teile des Verkleidungshalbproduktes (5) über den Körper (6) dieser Körper (6) völlig in der Verkleidung eingeschlossen wird.

2. Einrichtung zur Durchführung des Verfahrens nach Anspruch 1,
dadurch gekennzeichnet,
daß sie eine Segmentform oder mehrere Segmentformen aufweist, die bzw. deren jede durch einen festen Teil (7) gebildet ist, auf welchem zwei Segmentpaare (8, 8, 9, 9) drehbar gelagert sind, welche gemeinsam mit dem Hohlraum des festen Teiles (7) die zu verkleidende Kugelfläche einschließen, wobei jedes Segment die Gestalt einer Hälfte einer räumlichen Achtteilfläche aufweist, die bei dem Paar der kürzeren Segmente (8, 8) mit dem verengten Teil einwärts, d. h. in Richtung zu dem Hohlraum des festen Teils (7), und bei dem Paar der längeren Segmente (9, 9) mit dem verengten Teil auswärts gerichtet ist, daß die Segmente (8, 8, 9, 9) zum Einschließen der Kugelfläche auf je einer Viertelkreisbogenbahn (in Richtung des Pfeils (11)) über Zugstangen (10) von geradlinigen Motoren kippbar sind und daß die bzw. von denen jede Segmentform mit einem Druckfinger (12) mit einer Teilkugel-Endfläche (13) versehen ist, der in der vertikalen Achse der Segmentform angeordnet und vertikal (in Richtung des Pfeils (14)) verschiebbar ist.

FIG. 1

FIG. 2

FIG. 3

EP 0 387 370 A1

FIG. 4

FIG. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A- 790 483 (SOCIETE ANONYME DES PNEUMATIQUES DUNLOP) <br> * Seite 2, Zeilen 15-19; Seite 3, Zeilen 6-12; Figuren 5-8 * <br> --- | 1 | A 63 B 39/06 <br> B 29 D 22/00 |
| A | FR-A-2 309 254 (DUNLOP LTD) <br> * Seite 5, Zeile 28 - Seite 6, Zeile 12; Seite 9, Zeile 25 - Seite 10, Zeile 5; Figuren 1,2 * <br> --- | 1 | |
| A | FR-A- 552 588 (LAWTON et al.) <br> * Seite 2, Zeilen 49-65,75-97; Figuren 1-6 * <br> --- | 2 | |
| A | US-A-2 536 182 (HUMPHREY) <br> * Spalte 2, Zeilen 30-35; Spalte 2, Zeile 55 - Spalte 3, Zeile 8; Spalte 3, Zeilen 30-35; Spalte 4, Zeilen 47-70; Spalte 5, zeilen 27-37; Figuren 1-8 * <br> ----- | 2 | |

**RECHERCHIERTE SACHGEBIETE (Int. Cl.5)**

A 63 B
B 29 D
B 65 B

Der vorliegende Recherchenbericht wurde für alle Patentansprüche erstellt

| Recherchenort | Abschlußdatum der Recherche | Prüfer |
|---|---|---|
| DEN HAAG | 13-11-1989 | ZEINSTRA H.S.J.H. |